# EUROPÄISCHE PATENTANMELDUNG

(11) **EP 1 466 778 A2**
(43) Veröffentlichungstag der Anmeldung: **13.10.2004**
(21) Anmeldenummer: 04008045.9
(22) Anmeldetag: 02.04.2004
(51) Int. Cl.: B60K 41/00, B60K 6/04

(54) **Elektrodynamisches Antriebssystem**

(30) Priorität: 07.04.2003 DE 10315683
(71) Anmelder: ZF FRIEDRICHSHAFEN AG, 88038 Friedrichshafen (DE)
(72) Erfinder: Karch, Gerald, 88045 Friedrichshafen (DE); Winkel, Matthias, 88250 Weingarten (DE)

(57) **Zusammenfassung**

Ein elektrodynamisches Antriebssystem für ein Fahrzeug weist einen Antriebsmotor, dessen Antriebswelle über ein Getriebe, das aus mindestens zwei hintereinander angeordneten Getriebegruppen besteht, mit einer Abtriebswelle verbunden ist, und einen Elektromotor auf, der sich zwischen den zwei hintereinander angeordneten Getriebegruppen befindet.

## Beschreibung

Die Erfindung betrifft ein elektrodynamisches Antriebssystem nach der im Oberbegriff von Anspruch 1 näher definierten Art.

Elektrodynamische Maschinen werden in verschiedenen Systemen als Anordnungen zwischen einem Verbrennungsmotor und einem Getriebe im Fahrzeug vorgeschlagen. So wird beispielgebend in der DE 199 34 696 A1 ein elektrodynamische Antriebssystem für ein Fahrzeug beschrieben, das zwischen einer Antriebsmaschine und einem Schaltgetriebe ein Planetengetriebe aufweist, das die drei Elemente Sonnenrad, Hohlrad und Planetenträger umfasst. Der Planetenträger als erstes Element ist mit dem Schaltgetriebe verbunden, das Hohlrad als zweites Element ist mit der Antriebsmaschine verbunden und das Sonnenrad als drittes Element ist mit einem Elektromotor und mit einem elektrischen Wirbelstromretarder verbunden. Mit dieser Anordnung lässt sich die Antriebsmaschine starten, elektrische Energie erzeugen, elektrisch bremsen und das Fahrzeug auch aus dem Stand anfahren.

Bei automatischen Getrieben für Kraftfahrzeuge, die Schaltvorgänge automatisch auslösen, werden Zugkraftunterbrechungen während den Schaltungen von den Fahrern häufig als störend bzw. als Funktionsstörung empfunden. Um diesem Fehlempfinden entgegenzuwirken, werden im Stand der Technik elektrodynamische Maschinen in verschiedenen Systemen als Anordnungen zwischen einem Verbrennungsmotor und einem Getriebe im Fahrzeug vorgeschlagen. So wird beispielsweise in der DE 101 52 481 A1 ein elektrodynamisches Antriebssystem für ein Fahrzeug mit einem Schaltgetriebe und einem Planetengetriebe, das die drei Elemente Sonnenrad, Hohlrad und Planetenträger umfasst, beschrieben. Ein erstes Element ist mit einer Abtriebswelle, ein zweites Element ist mit einer Antriebsmaschine des Fahrzeugs und ein drittes Element ist mit einem Elektromotor und einer Dauerbremseinrichtung in Form einer Wirbelstrombremse verbunden. Weiterhin beschrieben ist eine Schalteinrichtung, die eine erste Schaltstellung aufweist, in der eine drehfeste Verbindung zwischen zwei Elementen des Planetengetriebes besteht, und mit einer zweiten Schaltstellung, in der die Verbindung zwischen den beiden Elementen des Planetengetriebes unterbrochen ist. Die Schalteinrichtung weist eine dritte Schaltstellung auf, in der eine drehfeste Verbindung zwischen dem dritten Element und einem festen Gehäuseteil besteht, dass an dem mit der Schalteinrichtung verbundenen Element ein Rotor der Wirbelstrombremse angeordnet ist, der mit einem Stator zusammenwirkt, der an dem Gehäuseteil angeordnet ist, und dass das Planetengetriebe an einer Abtriebswelle am Ausgang des Schaltgetriebes angeordnet ist.

Nachteilig wirkt sich die Tatsache aus, daß die nach dem Stand der Technik angeordneten Elektromotoren nur mit sehr großem Aufwand an das Getriebe hinsichtlich der Drehzahlen und Momente angepasst werden können. Weiterhin erfordern die bekannten Konzepte eine komplette Neugestaltung der Getriebe.

Der vorliegenden Erfindung liegt die Aufgabe zugrunde ein elektrodynamisches Antriebssystem darzustellen, das keine oder nur geringe Zugkraftunterbrechungen aufweist und gezielt auf die Eigenschaften und Betriebsbedingungen von bestehenden Getrieben abgestimmt werden kann.

Die der Erfindung zugrundeliegende Aufgabe wird durch ein, auch die kennzeichnenden Merkmale des Hauptanspruchs aufweisendes, gattungsgemäßes elektrodynamisches Antriebssystem gelöst.

Bei dem erfindungsgemäßen elektrodynamischen Antriebssystem wird ein Elektromotor nicht direkt mit dem Abtrieb verbunden, sondern direkt in das mehrteilige Getriebe integriert. Der Elektromotor wird vorteilhafterweise zwischen einem Hauptgetriebe und einer Nachschaltgruppe integriert. Es sind jedoch weitere Anordnungen des Elektromotors zwischen verschiedenen Getriebegruppen möglich. Die Integrierbarkeit in bestehende Getriebekonzepte ermöglicht eine einfache, auch optionale Montage ohne Mehraufwand bzw. ohne große Umrüstaktionen in der Montage. Weiterhin ergeben sich durch diese Anordnung Vorteile für die Auslegung und Gestaltung des Elektromotors bezüglich der Drehzahlen/Momente, da bei niedrigen Geschwindigkeiten die Untersetzung der Nachschaltgruppe zusätzlich geschaltet ist.

Wenn die Nachschaltgruppe mit einer Neutral-Stellung ausgeführt ist, so kann der Elektromotor zum Starten des Verbrennungsmotors verwendet werden. Bei Fahrzeugstillstand ist der Elektromotor als Generator verwendbar. Während der Fahrt ist die Generatorleistung von der Geschwindigkeit des Fahrzeuges abhängig. Zusätzlich ist der Elektromotor als Retarder verwendbar, so daß die Bremsenergie gespeichert und weiter genutzt werden kann. Der Elektromotor kann zur Unterstützung des Verbrennungsmotors beim Anfahren und Beschleunigen verwendet werden. Bei entsprechender Auslegung des Elektromotors ist sogar ein rein elektrisches Fahren des Fahrzeuges ohne Verbrennungsmotor möglich. Dies ist sehr vorteilhaft beim Rangieren. Kommt es bei Schaltungen über die Nachschaltgruppe zu kurzen Zugkraftunterbrechungen, so kann der Elektromotor als Synchronisierungshilfe eingesetzt werden kann, was zu einer Verkürzung der Schaltzeit führt. Dies bedeutet eine deutliche Verbesserung des Schaltkomforts und damit des Empfindens des Fahrers. Das erfindungsgemäße elektrodynamische Antriebssystem kann weiterhin zur Dämpfung von Schwingungen im Antriebsstrang eingesetzt werden.

## Patentansprüche

1. Elektrodynamisches Antriebssystem für ein Fahrzeug mit einem Antriebsmotor, dessen Antriebswelle über ein Getriebe, das aus mindestens zwei hintereinander angeordneten Getriebegruppen besteht, mit einer Abtriebswelle verbunden ist, und einem Elektromotor, **dadurch gekennzeichnet, daß** sich der Elektromotor zwischen den zwei hintereinander angeordneten Getriebegruppen befindet.

2. Elektrodynamisches Antriebssystem für ein Fahrzeug nach Anspruch 1, **dadurch gekennzeichnet, daß** das Getriebe aus einem Hauptgetriebe und einer Nachschaltgruppe besteht.

3. Elektrodynamisches Antriebssystem für ein Fahrzeug nach Anspruch 1, **dadurch gekennzeichnet, daß** das Getriebe aus einem Hauptgetriebe, einem mehrgängigen Splitgetriebe und einer Nachschaltgruppe besteht.

4. Elektrodynamisches Antriebssystem für ein Fahrzeug nach Anspruch 2 oder 3, **dadurch gekennzeichnet, daß** die Nachschaltgruppe als Planetengetriebe ausgebildet ist.

5. Verfahren zum Steuern eines elektrodynamischen Antriebssystems für ein Fahrzeug mit einem Antriebsmotor, dessen Antriebswelle über ein Getriebe, das aus mindestens zwei hintereinander angeordneten Getriebegruppen besteht, mit einer Abtriebswelle verbunden ist, und einem Elektromotor, der sich zwischen den hintereinander angeordneten Getriebegruppen befindet.
